# EUROPEAN PATENT SPECIFICATION

(11) **EP 3 409 637 B1**
(45) Date of publication and mention of the grant of the patent: **15.04.2020**
(21) Application number: 17173733.1
(22) Date of filing: 31.05.2017
(51) Int. Cl.: B66F 9/065, B62D 51/02, B62D 51/04, B66F 9/075, B66F 17/00, B60R 21/34

(54) **A LIFT-TRUCK COMPRISING A MOVABLE FOOT GUARD**
GABELSTAPLER MIT BEWEGLICHEM FUSSSCHUTZ
CHARIOT ÉLÉVATEUR COMPRENANT UN GARDE-PIED AMOVIBLE

(43) Date of publication of application: 05.12.2018
(73) Proprietor: Toyota Material Handling Manufacturing Sweden AB, 595 81 Mjölby (SE)
(72) Inventor: Carlbring, Jesper, 582 22 Linköping (SE); von Malortie, Johannes, 584 22 Linköping (SE)
(74) Representative: Ström & Gulliksson AB

(56) References cited:
- EP-A1- 2 392 506
- GB-A- 1 346 032
- US-A1- 2004 128 943

## Description

### Technical field

The present disclosure relates to a lift-truck comprising a pivotal driver's platform and a movable foot guard arranged at the rear of the lift-truck to protect the feet of the driver from being hit or pinched by the lift-truck.

### Background art

Lift-trucks, such as tiller-arm trucks may be operated by a person walking behind the truck or that stands on a pivotal driver's platform and hence rides along with the lift-truck. The lift-truck may be provided with a foot guard that protects the feet of the person, when walking behind the truck, from being pinched or overrun by the lift-truck.

In certain situations, a large clearance between the ground and the chassis of the lift-truck is necessary. For example when the lift-truck is operated in an environment with debris or other obstacles on the floor. The foot guard may therefore be coupled to the driver's platform such that the foot guard is moved to a raised position when the driver's platform is pivoted to a lowered position in which the driver may stand on the platform. When the driver leaves the platform, the platform pivots to an upright position and the foot guard is lowered to close the clearance to the ground.

A lift-truck with a movable foot guard coupled to a pivotal platform is disclosed in EP2392506. However, while the lift-truck of EP2392506 has been proven successful, the coupling between the foot guard and the platform is complex and involves several movable elements. It is also rather bulky which in turn makes it difficult to accommodate the foot guard and the coupling in the lift-truck.

Thus, it is an object of the present disclosure to provide a lift-truck with a movable foot guard that solves at least one of the drawbacks in the prior art. In particular, it is an object of the present disclosure to provide a lift-truck with a movable foot guard that may be accommodated within the chassis of the lift-truck. Yet a further object of the present disclosure is to provide a lift-truck with a movable foot guard of low cost and that is simple to manufacture and maintain.

### Summary of the disclosure

According to the present disclosure at least one of the aforementioned objects is met by a lift-truck 10 comprising a driver's platform 30 which is pivotal between an upright position A and lowered position B; and a foot guard 60 arranged at a rear 12 of the lift-truck; and a coupling means 50, for moving the foot guard 60 coupled to the foot guard and to the driver's platform, characterized in that the foot guard 60 comprises an attachment portion 63 which is attached to the lift truck, and that; at least a section of the foot guard is flexible, which hereby means that at least a section of the foot guard (60) may change its form or orientation when subjected to a force and return to its original form or orientation when the force is removed, such that the foot guard 60 may be raised from a foot protection position when the platform 30 is pivoted to the lowered position B and returned to the foot protection position when the platform 30 is pivoted to the upright position A.

Due to that at least a section of the foot guard is flexible and attached to the lift-truck it suffices that the coupling means are designed to exert a simple pulling force on the foot guard to bend or pivot it upwards from a foot protection position to a raised position. When the pulling force is removed, the foot guard returns by its own weight (and in embodiments by its elastic energy) to the original foot protection position. Overall, this design provides for an arrangement of coupling means and foot guard that is simple and robust and that may be produced at low cost. The arrangement of coupling means and foot guard is further compact and may easily be accommodated in the lift-truck.

According to an embodiment the foot guard 10 comprises a rear foot guard portion 61 and first and second lateral foot guard portions 62, 62' that extend parallel to each other in direction away from the rear foot guard portion towards a front end of the lift-truck. The first and the second lateral foot guard portion 62, 62' thereby comprises a respective attachment portion 63, 63' that is attached to the lift-truck. At least a section 62.2, 62.2' of the respective first and second lateral foot guard portion 62, 62' is flexible such that the foot guard 60 may be raised from a foot protection position when the platform 30 is pivoted to the lowered position B and to be returned to the foot protection position when the platform 30 is pivoted to the upright position A.

The foot guard of this design may advantageously be arranged within the housing of the lift-truck so that the foot guard in raised position extends adjacent the inner surface of the chassis of the lift-truck. This allow for a compact design of the lift truck .

### Brief description of the drawings

Figure 1: A schematic drawing of a lift-truck according to a first embodiment of the present disclosure.
Figure 2: A schematic detailed drawing of a section of the lift-truck of figure 1 including a foot guard according an embodiment of the present disclosure .
Figure 3a,b: Schematic drawings showing the function of a foot guard according to a first alternative of the present disclosure.
Figure 4a,b: Schematic drawings of a foot guard according to a second alternative of the present disclosure.
Figure 5a,b: Schematic drawings of a foot guard according to a third alternative of the present disclosure.
Figure 6: Schematic drawing showing the function of a foot guard according to the present disclosure.
Figure 7: A schematic detailed view of a foot guard according to the first alternative of the present disclosure.

### Detailed description of embodiments

The lift-truck according to the present disclosure will now be described more fully hereinafter. The lift-truck according to the present disclosure may however be embodied in many different forms and should not be construed as limited to the embodiments set forth herein. Rather, these embodiments are provided by way of example so that this disclosure will be thorough and complete, and will fully convey the scope of the present disclosure to those persons skilled in the art. Same reference numbers refer to same elements throughout the description.

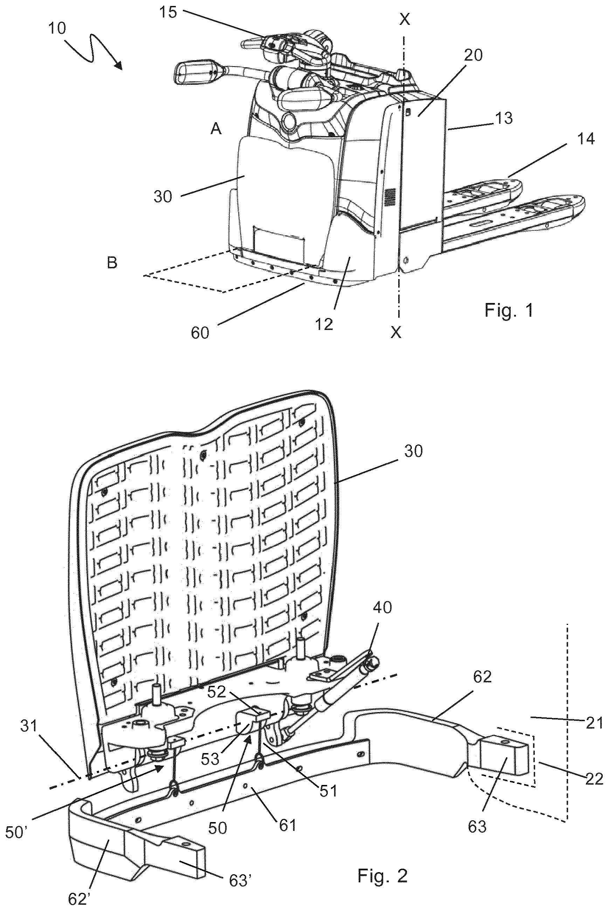

Figure 1 shows a lift-truck 10 according to the present disclosure. The lift-truck 10 comprises a chassis 20 and load engagement means 14 in the form of a lift-fork. The lift-truck also comprise a drive wheel and support wheels (not shown). The chassis 20 comprises a steering/control means 15 in the form of a tiller arm that allows a driver to operate the lift-truck when standing on the platform 30 or while walking behind the lift-truck. The chassis 20 may further comprises other components that are necessary for operating the truck, for example a motor, hydraulics and electrical wires and circuits (not shown). These, and other components of the truck, such as the drive wheel and support wheels are known in the art and will therefore not be described further.

The chassis 20 has a rear end 12, forming the rear of the lift-truck. The chassis further has a front end 13 forming the front of the lift truck. The front end 13 is opposite to the rear end 12 and faces in direction of the load engagement means 14. A driver's platform 30 is arranged on the rear end 12 of the chassis 20. The platform 30 is pivotally attached to chassis 20 such that it may be pivoted back and forth between an upright position A and a lowered position B (indicated by dashed lines). The lift-truck 10 further comprises a movable foot guard 60 that is coupled to the driver's platform 30 by a coupling means (not shown) such that the foot guard 60 may be raised, by the coupling means, from a foot protection position to a raised position. In figure 1, the platform 30 is in upright position A and the foot guard 60 is in the foot protection position. In the foot protection position, the foot guard covers 60 essentially the clearance between chassis 20 and the ground and protects thereby the foot or feet of driver of the lift-truck (not shown) from being overrun or pinched by the lift-truck 10.

Figure 2 shows in detail the rear end 12 of the chassis 20 in a view perpendicular to a cut along the line X-X in figure 1. Figure 2 shows also a portion of the inner surface 21 of the chassis 20. Other parts of the chassis 20 have been omitted to not obscure the driver's platform 30. The driver's platform 30 is pivotally attached to the rear of the chassis 20 by a pivot shaft 31. An actuator 40, such as a gas spring, may be provided between the platform 30 and the chassis 20 to force the platform 20 from the lowered position B to the upright position A. The foot guard 60 is arranged below, i.e. underneath, the pivot shaft 31. The foot guard 60 may further be arranged within the limits of inner surface 21 of the chassis 20. That is, when the foot guard 60 is in a foot protection position as shown in figure 2, the rear foot guard portion 61 and possibly a portion of the lateral foot guard portion 62, 62' are positioned below the chassis 20, but within the projection of the inner surface. When the foot guard 60 is in raised position (not shown) the foot guard 60 essentially extends along and adjacent the inner surface 21 of cassis 20.

The foot guard 60 comprises a rear foot guard portion 61, which extends over at least a portion of the rear end 12 of the chassis. The rear foot guard portion 61 extend preferably parallel with the pivot shaft 31. The foot guard 60 further comprises a first lateral foot guard portion 62 and a second lateral foot guard portion 62'. The first and the second lateral foot guard portion 62, 62'extend respectively from the rear foot guard portion 61 in direction towards the front of the lift-truck. Typically, the first and the second lateral foot guard portion 62, 62' are spaced apart and extends parallel to each other in direction away from the rear foot guard portion. The foot guard 60 thereby has the shape of an open frame. The shape of the foot guard 60 typically corresponds to the inner contour of the chassis.

The foot guard 60 comprises a first and a second attachment section 63, 63' which respectively are attached to the lift-truck. In the shown embodiment, the first and the second attachment portion 63, 63' is a respective end portion 63, 63' of the first and the second lateral foot guard portions 62, 62'. The end portions 63, 63' of the first and the second lateral foot guard portions 62, 62' may, as shown in figure 2, be attached to the inner surface 21 of the chassis 20. Attachment to the inner surface 21 of the chassis 20 may be achieved by inserting the ends 63, 63' into a respective holder 22, 22' on the inner surface 21 of the chassis. Alternatively, the ends 63, 63' may be attached by gluing or riveting.

A first and a second coupling means 50, 50' are arranged for moving the foot guard 60. In figure 2, some references numbers of the coupling means 50' have been omitted to not obscure the drawing. In the embodiment shown in figure 2, the coupling means 50, 50' comprises an elongate, pliable element 51, 51' which is attached by one end to the pivotal platform and by one end to the foot guard 60. In the shown embodiment one end of the respective first and the second elongate pliable element 51 is attached to the rear foot guard portion 61. For example, the pliable element 51, 51' is a wire or a chain or a strip or a helical spring. The coupling means 50, 50' may further comprise a bracket 52, 52' with a cylindrical winding surface 53, 53' for receiving the elongate pliable element 51, 51'. In operation, as will be described hereinafter, the elongate pliable element 51, 51' pulls the foot guard 60 upwards, when the pivotal platform 20 is pivoted into a lowered position B. The elongate pliable element 51, 51, is wound over the cylindrical winding surface 53, 53' which increases the ratio of lifting of the foot guard 60 in relation to the degree of pivoting of the platform 30.

While figure 2 shows two coupling means 50, 50' it is also possible to provide one coupling means or more than two coupling means. It is also possible to provide other types of coupling means, for example articulated links or gear/rack arrangements. It is also possible to omit one of the first and the second lateral foot guard portions 62, 62'. It is also possible to attach the foot guard 60 to other components of the lift-truck, for example to a beam or a frame within the chassis (not shown). It is also possible that the foot guard 60 may have different design than shown in the embodiment of figure 2. For example, the foot guard may be straight elongate element.

It is further appreciated that when, hereinabove or hereinafter, reference to features of one of a first and a second lateral foot guard portions 62, 62' is made, these features are also comprised in the other of the first and the second lateral foot guard portion 62, 62'. The same applies for the coupling means 50, 50'and other features that are disclosed herein as identical pairs.

According to the present disclosure at least a section of the foot guard 60 is flexible so that the foot guard 60 may be raised from a foot protection position, by the coupling means 50, when the platform 30 is pivoted to the lowered position B and to be returned to the foot protection position when the platform 30 is pivoted to the raised position A.

By "flexible" is hereby meant that at least a section of the foot guard 60 may change its form or orientation when subjected to a force and return to its original form or orientation when the force is removed. One non-limiting example of a flexible section of a foot guard that may change its form and orientation is a section which comprises or consists of elastic material, such as elastomer or rubber material. Non-limiting examples of elastic material includes hard rubber, PVC-elastomer, Poly-chloroprene and TPO. Another non-limiting example of a flexible section of a foot guard that may change its orientation when subjected to a force is a section of a foot guard that is pivotally attached to another section of the foot guard by e.g. a pivot shaft.

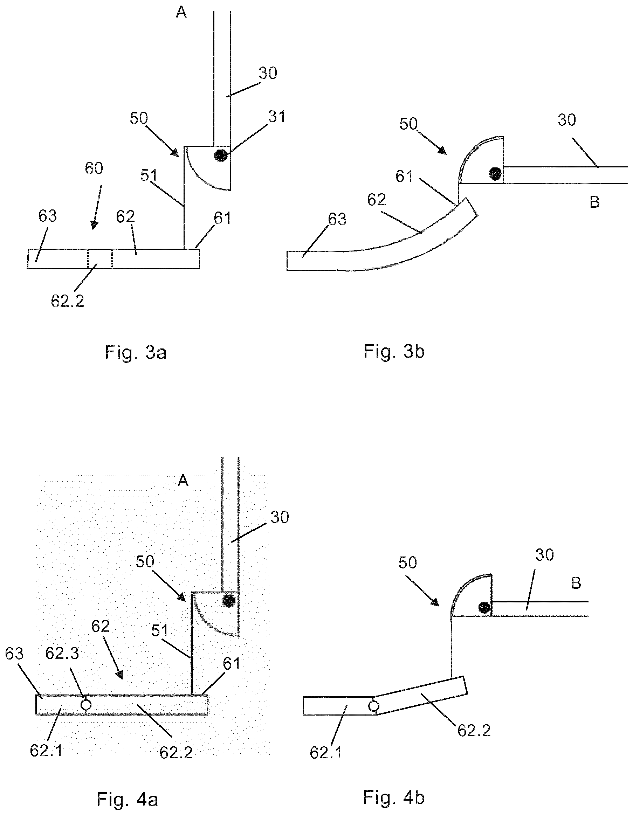

Preferably (see figure 3a or 4a), at least a section 62.2, 62.2' of the respective first and the second lateral foot guard portions 62, 62' is flexible. However, it is possible that the entire first and the second lateral foot guard portions 62, 62' are flexible

Figure 3a and 3b show schematically in a side view a first alternative of a foot guard 60 having a lateral foot guard portion 62. Also shown is a pivotal driver's platform 30 and a coupling means 50 having an elongate pliable element 51 which is attached the rear foot guard portion 61 as described under figure 2.

In figure 3a, the entire lateral foot guard portion 62 is manufactured from elastic material. However, as described above, it is possible that only a section 62.2 of the lateral foot guard 62 (indicated schematically by lines) comprise or consists of elastic materiel. As shown in figure 3, the section 62.2 is a length of the lateral foot guard portion 62 which comprises, or consists of elastic material throughout its cross-section (not shown). The flexible section 62.2 is positioned between the attachment portion 63 and the rear foot portion 61. Other sections of the lateral foot guard portion may be rigid. For example, manufactured from metal or rigid plastic material.

The platform 30 is in an upright position A and the lateral foot guard portion 62 is in a foot protection position. In this position, essentially no forces from the coupling means 50 is acting on the lateral foot guard portion 62.

In figure 3b the platform 30 is pivoted into a lowered position B. Since the end portion 63 of the lateral foot guard portion 62 is attached to the truck (not shown) the coupling means 50 exerts a pulling force on the rear foot guard portion 61. The elastic material in the lateral foot guard portion 62 thereby allows the lateral foot guard portion 62 to bend upwards (towards the pivot shaft 31) so that the rear foot guard portion 61 and at least a part of the lateral foot guard portion 62 is raised from the foot protection position. When the platform 30 is pivoted back into the upright position A, the pulling force from the coupling means 50 on the rear foot guard portion 61 is removed. The elastic material in the lateral foot guard portion 61 thereby relaxes and the foot guard 60 returns to its original foot protection position as shown in figure 3a. An advantage with using elastic material is that elastic energy is induced in the lateral foot guard portion when it is bent into the raised position. When the platform subsequently is raised the stored elastic energy in the lateral foot guard portion forces the foot guard rapidly back to the foot protection position. This, reduces the time for returning the foot guard to return to the foot protection position and is important from a safety perspective.

Figure 4a and 4b shows schematically a second alternative in which a flexible second section 62.2 of the lateral foot guard 62 is pivotally attached to a first section 62.1 of the lateral foot guard 62 by a pivot shaft 62.3. The end portion 63 of the first section 62.1 of the lateral foot guard 62 is attached to the lift-truck (not shown). As explained above, the rear foot guard section 61 and a part of the lateral foot guard portion 62 (i.e. the second section 62.2 of the lateral foot guard 62) is raised by the pulling force from the coupling means 50 when the platform 30 is pivoted to the lowered position B. When the platform 30 is pivoted back to the raised position A, the second section 62.2 of the lateral foot guard portion 62 returns and the foot guard 60 assumes the original foot protection position.

In the alternative shown in figures 4a and 4b, it is possible that the lateral foot guard portion 62 comprises further pivotally interconnected sections. It is also possible the end portion 63 of the lateral foot guard portion 62 is pivotally attached to the chassis.

It is appreciated that, in the alternative shown in figure 4a and 4b, the foot guard 60 may be manufactured from rigid material, for example metal or plastic material.

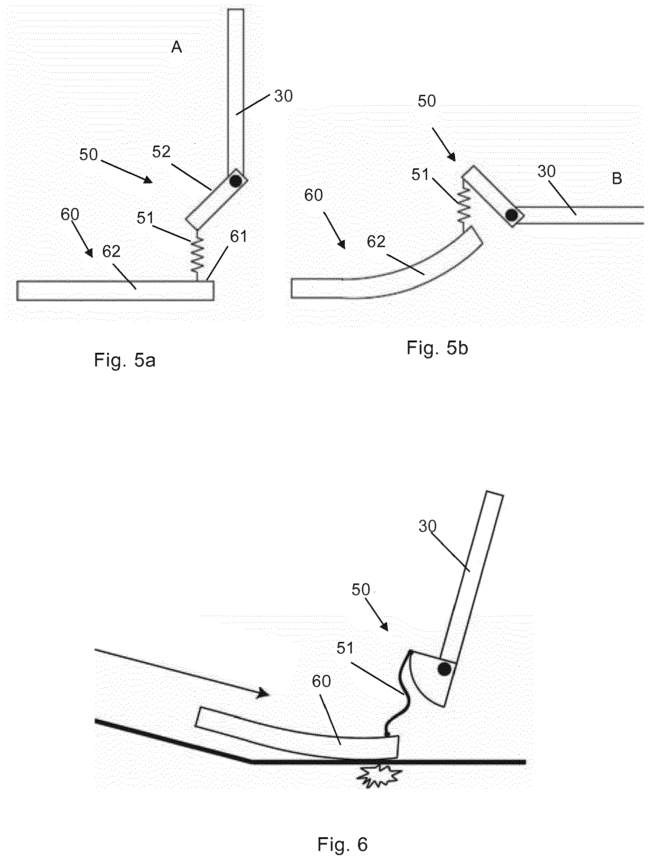

Figure 5a and 5b shows an alternative in which the coupling means 50 comprises an elongated pliable element 51 in the form of a helical spring that is attached to the rear foot guard portion 62 and to a bracket 52 on the platform 30. An advantage with using a helical spring is that the spring may assist in forcing the foot guard 60 back into the foot protection position when the platform 30 is returned to upright position A. This may be useful when the lateral foot guard portion 62 comprises elastic material and has been kept in raised position for so long time that creep in the material may have caused deformation to the lateral foot guard portion 62. The compression rigidity of the spring may thereby be sufficient to push the foot guard 60 back to the original foot protection position.

Figure 6 illustrates schematically the advantage of a coupling means 50 comprising an elongated pliable element 51 in the form of a wire that is attached to the foot guard 60 and to the pivotal platform 30. Figure 6 shows a situation in which the foot guard 60 is in the foot protection position and the lift-truck (not shown) is driven in direction of the arrow down a slope. Due to the inclination of the lift-truck, the foot guard 60 (as indicated in figure 6) may hit the flat ground at the end of the slope and the impact with the ground will force the foot guard 60 upwards. However, the elongated pliable element 51, i.e. the wire will fold or curl under the movement of the foot guard 60 and essentially no force from the impact between the foot guard 60 and the ground will be transferred to the driver's platform 30. This in turn minimizes wear on the attachment between the pivotal platform and the truck.

When the elongated pliable element 52 is a helical spring, as shown in figure 5, any impact between the foot guard 60 and the ground will be absorbed by compression of the helical spring.

In the alternatives shown in figures 3, 4 and 5 it is shown that the rear foot guard 61 and a part of the lateral foot guard portion 62 is raised by the coupling means 50. However, the extent by which the foot guard 60 is raised depends on parameters such as design of the lateral foot guard portion and/or the position or extension of the flexible section 62.2. Therefore, the expression "raising the foot guard" should be construed to include raising the rear guard portion 61 or raising the rear guard portion 61 and the lateral rear guard portion 62 or raising the rear guard portion 61 and a part of lateral rear guard portion 62. It is also appreciated that, when the foot guard 60 is raised, the attachment portion 63, 63' remains attached to the chassis of the lift-truck and that other the portions of the foot guard as described above are raised.

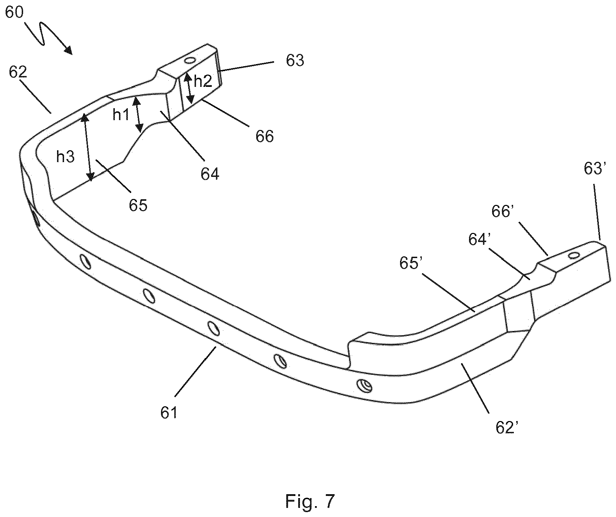

Figure 7 shows a perspective view of a foot guard 60 according to the first alternative of the lift-truck shown in figure 2. As described hereinabove, the foot guard 20 comprises a rear foot guard portion 61 and a first and a second lateral foot guard portion 62, 62' that extends parallel to each other in direction away from the rear foot guard portion. As shown in figure 6, the respective first and second lateral foot guard portions 62, 62'. comprises a curved transition to the rear foot guard portion 61. The lateral foot guard portions 62, 62' comprises a respective end portion 63, 63' by which the foot guard 60 is attached to the lift-truck. The lateral foot guard portions 62, 62' and the rear foot guard portion 61 are preferably integral, i.e. form one single piece. Each of the first and second lateral foot guard portion 61, 61' comprises a tapered segment 64, 64'. The tapered segment 64, 64' has a height hi, which is less than the height h2 and h3 of one or both segments of the lateral foot guard portion that are adjacent to the tapered segment 64, 64'. That, is the height h1 of the tapered segment 64, 64' is less than the height h3 of an adjacent segment 65, 65' of the lateral foot guard extending from the tapered segment 64, 64' towards the rear foot guard portion 61. Likewise, the height h1 of the tapered segment 64, 64' may be less than an adjacent segment 66, 66' extending from the tapered segment 64 towards the end 63, 63' of the lateral foot guard portion 62, 62.

When the foot guard 20, i.e. the lateral foot guard portion comprises elastic material, the tapered segment 64, 64' forms a respective bending guide for the lateral foot guard portion which ensures that the foot guard is raised to a selected height and position when the platform of the lift-truck (not shown) is pivoted to lowered position. It is appreciated that at least the tapered segment 64, 64' comprises or consists of elastic material.

## Claims

1. A lift-truck (10) comprising a driver's platform (30) which is pivotal between an upright position A and lowered position B; and a foot guard (60) arranged at a rear (12) of the lift-truck; and a coupling means (50), for moving the foot guard (60) coupled to the foot guard and to the driver's platform, **characterized in that**
- the foot guard (60) comprises an attachment portion (63) which is attached to the lift truck (10), and that;
- at least a section (62.2) of the foot guard (60) is flexible, which hereby means that at least a section of the foot guard (60) may change its form or orientation when subjected to a force and return to its original form or orientation when the force is removed, such that the foot guard (60) may be raised from a foot protection position when the platform (30) is pivoted to the lowered position B and returned to the foot protection position when the platform (30) is pivoted to the upright position A.

2. The lift-truck (10) according to claim 1 wherein the foot guard (60) comprises at least a first lateral foot guard portion (62) which comprises an attachment portion (63) which is attached to the lift truck (10) and wherein at least a section (62.2) of the first lateral foot guard portion (62) is flexible.

3. The lift-truck (10) according to claim 2, wherein the foot guard (60) comprises a rear foot guard portion (61) extending over at least a portion of the rear (12) of the lift-truck (10) wherein the at least first lateral foot guard portion (62) extends from the rear foot guard portion (61) in direction towards a front (13) of the lift-truck.

4. The lift-truck (10) according to claim 2 or 3, wherein the at least first lateral foot guard portion (61) comprises an end (63), wherein the end (63) is an attachment portion (63) that is attached to the lift-truck.

5. The lift-truck (10) according to claims 3 or 4, wherein the at least first lateral foot guard portion (62) is integral with the rear foot guard portion (61).

6. The lift-truck (10) according to anyone of claims 1 - 5, wherein the foot guard (60) comprises elastic material.

7. The lift-truck (10) according to claim 2, wherein at least a section (62.2) of the at least first lateral foot guard portion (62) comprises elastic material.

8. The lift-truck (10) according to anyone of claim 2 - 7, wherein the at least first lateral foot guard portion (61) comprises a tapered segment (64), wherein the height (h1) of the tapered segment is less than the height (h2, h3) of an adjacent segment (65, 66) of the at least first lateral foot guard portion.

9. The lift-truck (10) according to anyone of claims 1 - 8, comprising a chassis (20), wherein the foot guard (60) is arranged within the chassis (20).

10. The lift-truck (10) according to claim 9, wherein the foot guard (60), in raised position extends adjacent an inner surface (21) of the chassis (20).

11. The lift-truck (10) according to anyone of claims 1 - 10, wherein the coupling means (50) comprises an elongate pliable element (51), wherein a first end of the elongate pliable element (51), is attached to the foot guard (10) and a second end of the elongate pliable element (51), is attached to the driver's platform (30).

12. The lift-truck (10) according to claim 11, wherein the coupling means (50) comprises a bracket (52) arranged on the driver's platform (30), wherein the first end of the elongate pliable element (51) is attached to the bracket (52)

13. The lift-truck (10) according to claim 12, wherein the bracket (52) comprises a cylindrical winding surface (53), wherein the first end of the elongate pliable element (51) is attached to the bracket (52) such that the elongate pliable element (51) is wound over the cylindrical winding surface (53) when the foot guard (60) is moved to the raised position (A).

14. The lift-truck (10) according to anyone of claims 1- 13, wherein the foot guard (60) comprises a second lateral foot guard portion (62'), wherein the second lateral foot guard portion (62') comprises an attachment portion (63') that is attached to the lift-truck and wherein at least a section of the respective first and second lateral foot guard portion (62, 62') is flexible such that the foot guard (60) may be raised from a foot protection position when the platform (30) is pivoted to the lowered position B and to be returned to the foot protection position when the platform (30) is pivoted to the upright position A.

15. The lift-truck (10) according to claim 14, wherein the foot guard (60) comprises a rear foot guard portion (61) and wherein the first and the second lateral foot guard portions (62, 62') extend parallel to each other in direction away from the rear foot guard portion (61) towards a front end (13) of the lift-truck.

## Patentansprüche

1. Hubwagen (10) mit einer Fahrerplattform (30), die zwischen einer aufrechten Position A und einer abgesenkten Position B schwenkbar ist; und einem Fußschutz (60), der an einem Heck (12) des Hubwagens angeordnet ist; und einer Kopplungseinrichtung (50) zum Bewegen des Fußschutzes (60), die mit dem Fußschutz und der Fahrerplattform gekoppelt ist, **dadurch gekennzeichnet, dass**
- der Fußschutz (60) einen Befestigungsabschnitt (63) aufweist, der an dem Hubwagen (10) befestigt ist, und dass
- mindestens ein Abschnitt (62.2) des Fußschutzes (60) flexibel ist, was bedeutet, dass zumindest ein Teil des Fußschutzes (60) seine Form oder Ausrichtung ändern kann, wenn er einer Kraft ausgesetzt ist und zu seiner ursprünglichen Form oder Ausrichtung zurückkehrt, wenn die Kraft aufgehoben wird, so dass der Fußschutz (60) von einer Fußschutzposition angehoben werden kann, wenn die Plattform (30) in die abgesenkte Position B geschwenkt ist und in die Fußschutzposition zurückgebracht wird, wenn die Plattform (30) in die aufrechte Position A geschwenkt ist.

2. Hubwagen (10) nach Anspruch 1, wobei der Fußschutz (60) mindestens einen ersten seitlichen Fußschutzabschnitt (62) aufweist, der einen Befestigungsabschnitt (63) aufweist, der an dem Hubwagen (10) befestigt ist, und wobei mindestens ein Teil (62.2) des ersten seitlichen Fußschutzabschnitts (62) flexibel ist.

3. Hubwagen (10) nach Anspruch 2, wobei der Fußschutz (60) einen hinteren Fußschutzabschnitt (61) aufweist, der sich über mindestens einen Teil der Rückseite (12) des Hubwagens (10) erstreckt, wobei sich der mindestens erste seitliche Fußschutzabschnitt (62) von dem hinteren Fußschutzabschnitt (61) in Richtung auf eine Vorderseite (13) des Hubwagens erstreckt.

4. Hubwagen (10) nach Anspruch 2 oder 3, wobei der zumindest erste seitliche Fußschutzabschnitt (61) ein Ende (63) aufweist, wobei das Ende (63) ein Befestigungsabschnitt (63) ist, der an dem Hubwagen befestigt ist.

5. Hubwagen (10) nach Anspruch 3 oder 4, wobei der mindestens erste seitliche Fußschutzabschnitt (62) einstückig mit dem hinteren Fußschutzabschnitt (61) ist.

6. Hubwagen (10) nach einem der Ansprüche 1 bis 5, wobei der Fußschutz (60) ein elastisches Material umfasst.

7. Hubwagen (10) nach Anspruch 2, wobei mindestens ein Abschnitt (62.2) des mindestens ersten seitlichen Fußschutzteils (62) ein elastisches Material umfasst.

8. Hubwagen (10) nach einem der Ansprüche 2 bis 7, wobei der zumindest erste seitliche Fußschutzabschnitt (61) ein konisches Segment (64) aufweist, wobei die Höhe (h1) des konischen Segments geringer ist als die Höhe (h2, h3) eines benachbarten Segments (65, 66) des zumindest ersten seitlichen Fußschutzabschnitts.

9. Der Hubwagen (10) nach einem der Ansprüche 1 - 8, umfassend ein Chassis (20), wobei der Fußschutz (60) innerhalb des Chassis (20) angeordnet ist.

10. Hubwagen (10) nach Anspruch 9, wobei sich der Fußschutz (60) in angehobener Position benachbart zu einer Innenfläche (21) des Chassis (20) erstreckt.

11. Hubwagen (10) nach einem der Ansprüche 1 bis 10, wobei die Kopplungseinrichtung (50) ein längliches, biegsames Element (51) umfasst, wobei ein erstes Ende des länglichen, biegsamen Elements (51) an dem Fußschutz (10) befestigt ist und ein zweites Ende des länglichen, biegsamen Elements (51) an der Fahrerplattform (30) befestigt ist.

12. Hubwagen (10) nach Anspruch 11, wobei die Kopplungseinrichtung (50) eine auf der Fahrerplattform (30) angeordnete Halterung (52) aufweist, wobei das erste Ende des länglichen biegsamen Elements (51) an der Halterung (52) befestigt ist.

13. Hubwagen (10) nach Anspruch 12, wobei die Halterung (52) eine zylindrische Wickelfläche (53) aufweist, wobei das erste Ende des länglichen, biegsamen Elements (51) an der Halterung (52) so befestigt ist, dass das längliche, biegsame Element (51) über die zylindrische Wickelfläche (53) gewickelt wird, wenn der Fußschutz (60) in die angehobene Position (A) bewegt wird.

14. Hubwagen (10) nach einem der Ansprüche 1 bis 13, wobei der Fußschutz (60) einen zweiten seitlichen Fußschutzabschnitt (62') aufweist, wobei der zweite seitliche Fußschutzabschnitt (62') einen Befestigungsabschnitt (63') aufweist, der an dem Hubwagen befestigt ist, und wobei mindestens ein Abschnitt des ersten bzw. zweiten seitlichen Fußschutzabschnitts (62, 62') flexibel ist, so dass der Fußschutz (60) aus einer Fußschutzposition angehoben werden kann, wenn die Plattform (30) in die abgesenkte Position B geschwenkt ist, und in die Fußschutzposition zurückgebracht werden kann, wenn die Plattform (30) in die aufrechte Position A geschwenkt ist.

15. Hubwagen (10) nach Anspruch 14, wobei der Fußschutz (60) einen hinteren Fußschutzabschnitt (61) aufweist und wobei sich der erste und der zweite seitliche Fußschutzabschnitt (62, 62') parallel zueinander in Richtung von dem hinteren Fußschutzabschnitt (61) weg zu einem vorderen Ende (13) des Hubwagens erstrecken.

## Revendications

1. Chariot élévateur (10) comprenant une plateforme du conducteur (30) qui est pivotante entre une position droite A et une position abaissée B ; et un protège-pied (60) agencé au niveau d'un arrière (12) du chariot élévateur ; et un moyen d'accouplement (50), permettant de déplacer le protège-pied (60), accouplé au protège-pied et à la plateforme du conducteur, **caractérisé en ce que**
- le protège-pied (60) comprend une partie d'attache (63) qui est attachée au chariot élévateur (10), et **en ce que**
- au moins une section (62.2) du protège-pied (60) est flexible, ce qui signifie ainsi qu'au moins une section du protège-pied (60) peut changer sa forme ou son orientation lorsqu'elle est soumise à une force et retourner à sa forme ou son orientation d'origine lorsque la force est retirée, de telle sorte que le protège-pied (60) puisse être surélevé à partir d'une position de protection de pied lorsque la plateforme (30) pivote jusqu'à la position abaissée B et retourne à la position de protection de pied lorsque la plateforme (30) pivote jusqu'à la position droite A.

2. Chariot élévateur (10) selon la revendication 1 dans lequel le protège-pied (60) comprend au moins une première partie de protège-pied latérale (62) qui comprend une partie d'attache (63) qui est attachée au chariot élévateur (10) et dans lequel au moins une section (62.2) de la première partie de protège-pied latérale (62) est flexible.

3. Chariot élévateur (10) selon la revendication 2, dans lequel le protège-pied (60) comprend une partie de protège-pied arrière (61) s'étendant au-dessus d'au moins une partie de l'arrière (12) du chariot élévateur (10) dans lequel l'au moins une première partie de protège-pied latérale (62) s'étend à partir de la partie de protège-pied arrière (61) dans une direction vers un avant (13) du chariot élévateur.

4. Chariot élévateur (10) selon la revendication 2 ou 3, dans lequel l'au moins une première partie de protège-pied latérale (61) comprend une extrémité (63), dans lequel l'extrémité (63) est une partie d'attache (63) qui est attachée au chariot élévateur.

5. Chariot élévateur (10) selon les revendications 3 ou 4, dans lequel l'au moins une première partie de protège-pied latérale (62) forme un seul bloc avec la partie de protège-pied arrière (61).

6. Chariot élévateur (10) selon l'une quelconque des revendications 1 - 5, dans lequel le protège-pied (60) comprend un matériau élastique.

7. Chariot élévateur (10) selon la revendication 2, dans lequel au moins une section (62.2) de l'au moins une première partie de protège-pied latérale (62) comprend un matériau élastique.

8. Chariot élévateur (10) selon l'une quelconque des revendications 2 - 7, dans lequel l'au moins une première partie de protège-pied latérale (61) comprend un segment effilé (64), dans lequel la hauteur (h1) du segment effilé est inférieure à la hauteur (h2, h3) d'un segment adjacent (65, 66) de l'au moins une première partie de protège-pied latérale.

9. Chariot élévateur (10) selon l'une quelconque des revendications 1 - 8, comprenant un châssis (20), dans lequel le protège-pied (60) est agencé à l'intérieur du châssis (20).

10. Chariot élévateur (10) selon la revendication 9, dans lequel le protège-pied (60), en position surélevée, s'étend de manière adjacente à une surface intérieure (21) du châssis (20).

11. Chariot élévateur (10) selon l'une quelconque des revendications 1 - 10, dans lequel le moyen d'accouplement (50) comprend un élément souple allongé (51), dans lequel une première extrémité de l'élément souple allongé (51) est attachée au protège-pied (10) et une seconde extrémité de l'élément souple allongé (51) est attachée à la plateforme du conducteur (30).

12. Chariot élévateur (10) selon la revendication 11, dans lequel le moyen d'accouplement (50) comprend un support (52) agencé sur la plateforme du conducteur (30), dans lequel la première extrémité de l'élément souple allongé (51) est attachée au support (52).

13. Chariot élévateur (10) selon la revendication 12, dans lequel le support (52) comprend une surface d'enroulement cylindrique (53), dans lequel la première extrémité de l'élément souple allongé (51) est attachée au support (52) de telle sorte que l'élément souple allongé (51) soit enroulé sur la surface d'enroulement cylindrique (53) lorsque le protège-pied (60) est déplacé jusqu'à la position surélevée (A).

14. Chariot élévateur (10) selon l'une quelconque des revendications 1 - 13, dans lequel le protège-pied (60) comprend une seconde partie de protège-pied latérale (62'), dans lequel la seconde partie de protège-pied latérale (62') comprend une partie d'attache (63') qui est attachée au chariot élévateur et dans lequel au moins une section des première et seconde parties de protège-pied latérales (62, 62') respectives est flexible de telle sorte que le protège-pied (60) puisse être surélevé à partir d'une position de protection de pied lorsque la plateforme (30) pivote jusqu'à la position abaissée B et retourne à la position de protection de pied lorsque la plateforme (30) pivote jusqu'à la position droite A.

15. Chariot élévateur (10) selon la revendication 14, dans lequel le protège-pied (60) comprend une partie de protège-pied arrière (61) et dans lequel les première et seconde parties de protège-pied latérales (62, 62') s'étendent parallèles l'une à l'autre dans une direction à l'opposé de la partie de protège-pied arrière (61) vers une extrémité avant (13) du chariot élévateur.
